# EUROPÄISCHE PATENTSCHRIFT

(11) **EP 3 277 547 B1**
(45) Veröffentlichungstag und Bekanntmachung des Hinweises auf die Patenterteilung: **10.04.2019**
(21) Anmeldenummer: 16704601.0
(22) Anmeldetag: 12.02.2016
(51) Int. Cl.: B60S 1/34

(54) **WISCHERARMANBINDUNG**
WIPER ARM CONNECTION
ATTACHE D'UN BRAS D'ESSUIE-GLACE

(30) Priorität: 01.04.2015 DE 102015205870
(43) Veröffentlichungstag der Anmeldung: 07.02.2018
(73) Patentinhaber: Robert Bosch GmbH, 70442 Stuttgart (DE)
(72) Erfinder: HAWIGHORST, Achim, 77830 Buehlertal (DE)
(86) Internationale Anmeldenummer: PCT/EP2016/052970
(87) Internationale Veröffentlichungsnummer: WO 2016/155931

(56) Entgegenhaltungen:
- EP-A2- 2 147 839
- DE-A1-102012 201 063

## Beschreibung

### Stand der Technik

Die vorliegende Erfindung betrifft eine Anordnung, die einen mit einem Wischblatt versehenen Wischerarm zur Befestigung an einer Abtriebswelle eines Wischersystems aufweist, die über mindestens ein Lagerelement um eine Längsmittelachse an einer zugeordneten Fahrzeugkarosserie drehbeweglich gelagert ist. Die DE 10 2012 201 063 A1 offenbart eine gattungsgemäße Anordnung.

Aus dem Stand der Technik ist ein Wischersystem mit einem Wischerarm und einem Wischergelenk bekannt, bei dem das Wischergelenk zwischen einer Wischerarmaufnahme und einem Wischblatthaltearm positioniert ist. Mittels der Wischerarmaufnahme wird der Wischerarm auf einem z.B. konischen und längsgerändelten Endabschnitt einer Abtriebswelle des Wischersystems gelagert und dort mittels einer Verbindungsmutter befestigt. Eine für einen einwandfreien Wischbetrieb in der Regel notwendige Auflagekraft des Wischblattes auf einer zugeordneten Fahrzeugscheibe wird hierbei z.B. mittels einer Zugfeder erzeugt, die zwischen dem Wischblatthaltearm mit dem daran befestigten Wischblatt und der Wischerarmaufnahme angeordnet ist.

### Offenbarung der Erfindung

Gemäß der vorliegenden Erfindung wird eine Anordnung bereitgestellt, die einen mit einem Wischblatt versehenen Wischerarm zur Befestigung an einer Abtriebswelle eines Wischersystems aufweist, die über mindestens ein Lagerelement um eine Längsmittelachse an einer zugeordneten Fahrzeugkarosserie drehbeweglich gelagert ist, wobei ein Anbindungsabschnitt des Wischerarms verdrehgesichert und axial in Richtung der Längsmittelachse verschiebbar an der Abtriebswelle befestigbar ist und mittels mindestens eines im Bereich der Abtriebswelle anordenbaren Federelements in Richtung der Fahrzeugkarosserie federbeaufschlagbar ist, um zumindest einen Höhentoleranzausgleich des Wischblatts des an der Abtriebswelle befestigten Wischerarms im Betrieb zu ermöglichen.

Die Erfindung ermöglicht somit die Ausbildung einer höhenvariablen und gelenkfreien Wischerarmanbindung zur Befestigung eines Wischerarms an einer Abtriebswelle eines Wischersystems für ein Kraftfahrzeug. Diese Wischerarmanbindung ermöglicht eine zumindest weitgehende Kompensation von Toleranzen, die unter anderem durch eine Lageabweichung der Abtriebswelle von einer jeweils konstruktiv vorgesehenen Idealposition im Raum entstehen. Eine derartige Lageabweichung kann vielfältige Ursachen, wie z.B. Toleranzen der Abtriebswelle selbst, Einbautoleranzen oder auch Fertigungstoleranzen der Karosserie haben. Hierbei wird zumindest ein effizienter Höhentoleranzausgleich des Wischblatts im Betrieb ermöglicht, sodass vorteilhafterweise ein gelenkfreier Wischerarm Anwendung finden kann, der darüber hinaus aufgrund des Federelements das Wischblatt mit einer vorgegebenen Auflagekraft gegen eine mittels des Wischblatts zu reinigende Fahrzeugscheibe beaufschlagen kann.

Gemäß einer Ausführungsform ist auf einem Endabschnitt der Abtriebswelle ein Verbindungselement axial unbeweglich befestigbar und der Anbindungsabschnitt des Wischerarms weist eine Aufnahme zur zumindest bereichsweise formschlüssigen Aufnahme des Verbindungselements auf.

Hierdurch kann der Höhentoleranzausgleich auf einfache Art und Weise ermöglicht werden, ebenso wie eine Erzeugung einer erforderlichen Andruckkraft für den Wischerarm. Die formschlüssige Verbindung kann z.B. mit einer Axialverzahnung einer Außenfläche des Verbindungselements und einer hierzu korrespondierend ausgeführten Axialverzahnung einer Innenfläche der Aufnahme ausgeführt sein. Alternativ können die Außen- und Innenfläche auch korrespondierende, vieleckige Schnittgeometrien aufweisen. Grundsätzlich können jedoch beliebige Geometriepaarungen zum Einsatz kommen, die eine drehfeste, jedoch axial verschiebbare Kopplung zwischen dem Verbindungselement und der Aufnahme im Anbindungsabschnitt des Wischerarms gestatten. Durch eine z.B. konische Ausbildung des Endabschnitts der Abtriebswelle und eine entsprechend ausgebildete Öffnung im Verbindungselement ist eine besondere feste und zugleich wackelfreie Befestigung des Verbindungselements auf der Abtriebswelle gegeben.

Vorzugsweise ist das mindestens eine Federelement zwischen dem Verbindungselement und einem Boden der Aufnahme abstützbar, wobei der Boden der Aufnahme eine Öffnung zur Durchführung der Abtriebswelle aufweist.

Hierdurch wird der Anbindungsabschnitt und damit das Wischblatt stets mit einer vorgegebenen Auflagekraft gegen die Fahrzeugscheibe gedrückt. Das Federelement kann mit einem Elastomer, mit einem Schaumkunststoff, mit einer als Druckfeder ausgeführten zylindrischen Spiraldruckfeder etc. gebildet sein.

Bevorzugt weist das Verbindungselement eine Öffnung zur Anordnung auf dem Endabschnitt der Abtriebswelle auf und ist auf dieser mittels eines zugeordneten Befestigungselements lagefixierbar.

Hierdurch ist eine konstruktiv einfache Lagesicherung des Verbindungselements auf dem Endabschnitt der Abtriebswelle gegeben. Der Endabschnitt der Abtriebswelle ist hierbei bevorzugt konisch ausgebildet und vorzugsweise mit einer Rändelung zur Schaffung eines kombinierten Form- und Pressschlusses mit der Öffnung im Verbindungselement ausgerüstet. Als Befestigungselement kann z.B. eine Schraubmutter oder eine s.g. Speednut® zum Einsatz kommen.

Vorzugsweise ist die Aufnahme mit einem zugeordneten Verschlusselement verschließbar.

Hierdurch wird das Eindringen von Fremdpartikeln in die Aufnahme nach einer Montage des Wischerarms an der Abtriebswelle effizient vermieden, so dass eine leichtgängige Verschiebbarkeit des Wischerarms auf der Abtriebswelle langfristig gewährleistet ist.

Gemäß einer weiteren Ausführungsform weist der Anbindungsabschnitt des Wischerarms eine Aufnahme mit einem Boden auf und in den Boden ist eine Öffnung zur zumindest bereichsweise formschlüssigen Aufnahme eines Kopplungsabschnitts der Abtriebswelle eingebracht.

Infolgedessen ist eine drehfeste und zugleich begrenzt axiale Verschiebbarkeit des Anbindungsabschnitts des Wischerarms auf der Abtriebswelle gegeben. Hierdurch kann auf eine Verwendung eines separaten Kopplungselements verzichtet werden.

Bevorzugt ist ein Einlegeelement in der Öffnung vorgesehen, das im Bereich zwischen dem Kopplungsabschnitt der Abtriebswelle und der Öffnung positionierbar ist.

Infolge des Einlegeelements ergibt sich unter anderem eine verbesserte Drehmomentübertragung zwischen der Abtriebswelle und dem daran befestigten Anbindungsabschnitt des Wischerarms. Das Einlegeelement kann zudem im Verschleißfall leicht ausgetauscht werden.

Vorzugsweise ist das Einlegeelement zumindest abschnittsweise nach Art einer hohlzylindrischen Hülse ausgebildet, die dazu ausgebildet ist, den Kopplungsabschnitt der Abtriebswelle zumindest abschnittsweise koaxial zu umschließen, wobei an einem axialen Hülsenende ein radial auswärts gerichteter Flansch ausgebildet ist.

Aufgrund des im Vergleich zu einem Abtriebswellendurchmesser erhöhten Durchmessers des Flansches verbessert sich die Drehmomentübertragungsfähigkeit der Verbindung zwischen der Abtriebswelle und dem Anbindungsabschnitt des Wischerarms. Die Hülse kann z.B. bereichsweise mit dem Material des Wischerarms umspritzt sein.

Bevorzugt ist mindestens ein Federelement vorgesehen, das zwischen einem an einem Endabschnitt der Abtriebswelle vorgesehenen Befestigungselement und dem Boden der Aufnahme und/oder dem Flansch des Einlegeelements anordenbar ist.

Infolgedessen ist eine zuverlässige Befestigung des Anbindungsabschnitts des Wischerarms auf der Abtriebswelle gegeben.

Vorzugsweise ist die Aufnahme mit einem Verschlusselement verschließbar.

Hierdurch wird das Eindringen von Fremdpartikeln und Feuchtigkeit vermieden, so dass die Leichtgängigkeit der axialen Verschiebbarkeit langfristig sichergestellt ist.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: einen schematischen Längsschnitt durch eine Anordnung zur Befestigung eines Wischerarms mit einem Wischblatt an einer Abtriebswelle eines Wischersystems gemäß einer ersten Ausführungsform,
- Fig. 2: eine Draufsicht auf die Anordnung von Fig. 1,
- Fig. 3: einen schematischen Längsschnitt durch eine zweite und dritte Ausführungsform einer Anordnung zur Befestigung eines Wischerarms mit einem Wischblatt an einer Abtriebswelle eines Wischersystems,
- Fig. 4: eine vierte Ausführungsform einer Anordnung zur Befestigung eines Wischerarms mit einem Wischblatt an einer Abtriebswelle eines Wischer-systems, und
- Fig. 5: eine fünfte Ausführungsform einer Anordnung zur Befestigung eines Wischerarms mit einem Wischblatt an einer Abtriebswelle eines Wischer-systems.

### Beschreibung der Ausführungsbeispiele

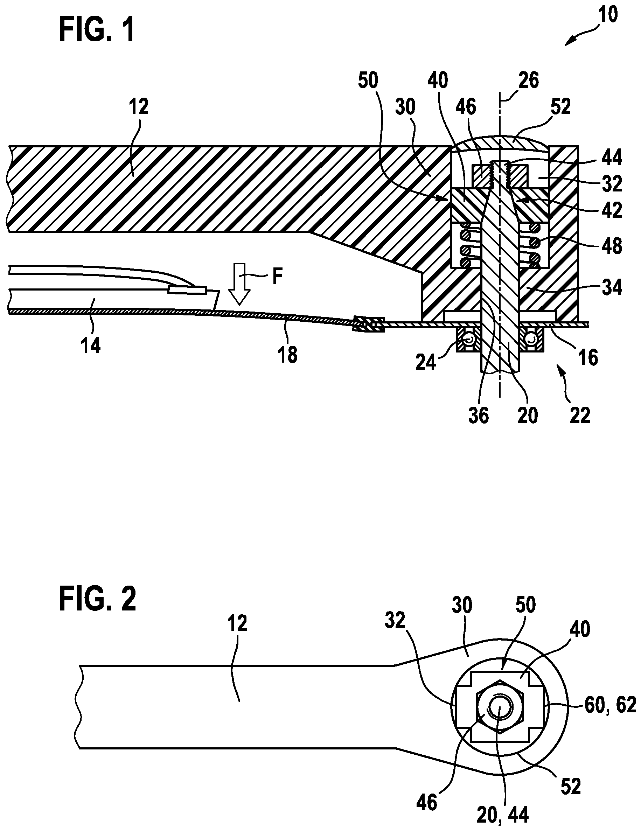

Fig. 1 zeigt eine gemäß einer ersten Ausführungsform ausgebildete Anordnung 10 mit einem Wischerarm 12 und einem daran unterseitig befestigten Wischblatt 14 zur Reinigung einer in eine Fahrzeugkarosserie 16 eingesetzten Fahrzeugscheibe 18. Der Wischerarm 12 ist bevorzugt mit einem gegebenenfalls faserarmierten thermoplastischen Kunststoffmaterial gebildet. Weiterhin verfügt die Anordnung 10 illustrativ über eine Abtriebswelle 20 als Teil eines Wischersystems 22, die mittels eines Lagerelements 24 drehbeweglich um eine Längsmittelachse 26 in der Fahrzeugkarosserie 16 gelagert ist. Die Abtriebswelle 20 ist bevorzugt mit einem metallischen Werkstoff gebildet.

In einen Anbindungsabschnitt 30 des Wischerarms 12 ist vorzugsweise eine Aufnahme 32 eingebracht, deren Boden 34 bevorzugt eine Öffnung 36 zur Durchführung der Abtriebswelle 20 aufweist. In der Aufnahme 32 ist ein Verbindungselement 40 zumindest bereichsweise formschlüssig aufgenommen. Dieses Verbindungselement 40 verfügt über eine Öffnung 42 zur Durchführung eines hier beispielhaft zumindest abschnittsweise konisch ausgebildeten Endabschnitts 44 der Abtriebswelle 20. Mittels eines hier beispielhaft als selbstsichernde Schraubmutter, als Speednut® oder dergleichen ausgeführten Befestigungselements 46 ist das Verbindungselement 40 auf dem Endabschnitt 44 der Abtriebswelle 20 befestigt.

Bevorzugt ist zwischen dem Verbindungselement 40 und dem Boden 34 der Aufnahme 32 ein Federelement 48 eingespannt, das hier beispielhaft als zylindrische Spiraldruckfeder ausgeführt ist. Anstelle einer zylindrischen Spiraldruckfeder kann ein anderes elastisches Element, wie z.B. ein Federelement aus einem Elastomer oder dergleichen, vorgesehen sein.

Aufgrund der Kraftwirkung dieses Federelements 48 wird der Wischerarm 12 und damit auch das Wischblatt 14 mit einer definierten Kraft F gegen die Kraftfahrzeugscheibe 18 gedrückt bzw. zur Anlage gebracht, wobei das Verbindungselement 40 als Widerlager dient. Eine frei liegende Zugfeder zur Gewährleistung einer ausreichenden Andruckkraft des Wischerarms 12 ist hierdurch entbehrlich. Infolge der axialen Verschiebbarkeit des Wischerarms 12 in Relation zur Fahrzeugscheibe bzw. -karosserie 16, 18 ist zugleich ein umfangreicher Ausgleich von Toleranzabweichungen möglich, die z.B. durch Montagetoleranzen, Maßabweichungen der Karosserie oder Fertigungstoleranzen des Wischersystems 22 selbst entstehen.

Zwischen dem Verbindungselement 40 und der Ausnehmung 32 besteht vorzugsweise eine Formschlussverbindung 50. Durch diese Formschlussverbindung 50 ist der Anbindungsabschnitt 30 des Wischerarms 12 einerseits drehfest mit dem Verbindungselement 40 und damit mit der Abtriebswelle 20 verbunden, lässt sich andererseits zugleich entgegen der Kraftwirkung des Federelements 48 axial bzw. parallel zur Längsmittelachse 26 auf dem Verbindungselement 40 verschieben. Die Begrenzung des axialen Verfahrweges erfolgt hierbei durch das Wischblatt 14 sowie das vollständig komprimierte Federelement 48.

Durch ein kappenförmiges Verschlusselement 52 ist die Aufnahme 32 vorzugsweise gegenüber schädlichen Umgebungseinflüssen, insbesondere gegen das Eindringen von Fremdpartikeln etc., geschützt. Darüber hinaus wird durch das Verschlusselement 52 der optische Gesamteindruck der Anordnung 10 verbessert.

Fig. 2 zeigt das Verbindungselement 40 von Fig. 1, das mittels des Befestigungselements 46 von Fig. 1 auf dem Endabschnitt 44 der Abtriebswelle 20 von Fig. 1 drehfest und axial unverschiebbar befestigt ist. Zur Realisierung der oben beschriebenen, formschlüssigen Verbindung 50 von Fig.1 weist das Verbindungselement 40 hier lediglich exemplarisch eine vieleckige, periphere Querschnittsgeometrie 60 auf, die in eine korrespondierend ausgebildete vieleckige, innenseitige Querschnittsgeometrie 62 der Aufnahme 32 von Fig. 1 eingreift.

Alternativ kann die Formschlussverbindung 50 z.B. mit einer Axialverzahnung einer Außenfläche des Verbindungselements 40 und einer hierzu korrespondierend ausgeführten Axialverzahnung einer Innenfläche der Aufnahme 32 ausgeführt sein. Grundsätzlich kann jedoch jede beliebige Geometriepaarung zum Einsatz kommen, die eine drehfeste, jedoch zugleich axial verschiebbare Kopplung zwischen dem Verbindungselement 40 und der Aufnahme 32 im Anbindungsabschnitt 30 des Wischerarms 12 von Fig. 1 gestattet.

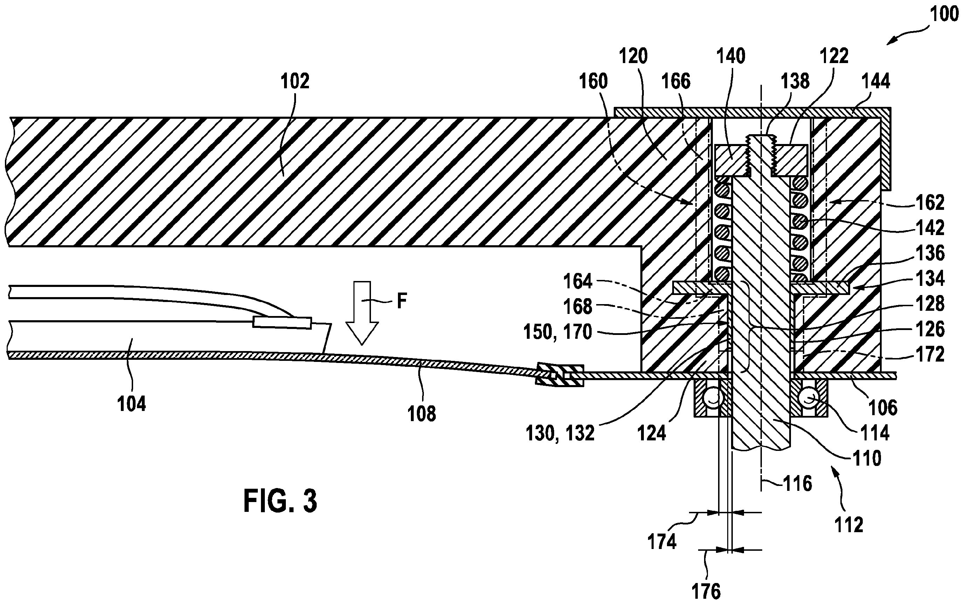

Fig. 3 zeigt eine gemäß einer zweiten ausgebildete Anordnung 100, die bevorzugt einen Wischerarm 102 mit einem daran unterseitig befestigten Wischblatt 104 zur Reinigung einer in eine Fahrzeugkarosserie 106 eingesetzten Fahrzeugscheibe 108 aufweist. Weiterhin verfügt die Anordnung 100 vorzugsweise über eine Abtriebswelle 110 als Teil eines Wischersystems 112, die mittels eines Lagerelements 114 drehbeweglich um eine Längsmittelachse 116 in der Fahrzeugkarosserie 106 gelagert ist.

In einen Anbindungsabschnitt 120 des Wischerarms 102 ist bevorzugt eine Aufnahme 122 eingelassen, deren Boden 124 vorzugsweise eine durchgehende Öffnung 126 zur Durchführung eines Kopplungsabschnitts 128 der Abtriebswelle 110 aufweist. In der Öffnung 126 ist ein Einlegeelement 130 angeordnet, das hier lediglich exemplarisch nach Art einer hohlzylindrischen Hülse 132 mit einem an einem von der Fahrzeugkarosserie 106 wegweisenden Hülsenende 134 angeordneten, radial auswärts gerichteten und kreisringförmigen Flansch 136 ausgestaltet ist.

An einem Endabschnitt 138 der Abtriebswelle 110 ist bevorzugt ein Befestigungselement 140 angeordnet, bei dem es sich z.B. um eine selbstsichernde Schraubenmutter, eine Speednut® oder dergleichen handeln kann. Zwischen dem Befestigungselement 140 und dem Flansch 136 bzw. dem Boden 124 der Aufnahme 122 ist vorzugsweise ein Federelement 142 eingespannt, das illustrativ wiederum als eine zylindrische Spiraldruckfeder ausgeführt ist und sich zwischen dem als Widerlager dienenden Befestigungselement 140 und dem Flansch 136 der Hülse 132 abstützt. Anstelle einer zylindrischen Spiraldruckfeder kann ein anderes elastisches Element, wie z.B. ein Federelement aus einem Elastomer oder dergleichen, vorgesehen sein.

Die Hülse 132 ist bevorzugt kraftschlüssig mit dem Anbindungsabschnitt 120 des Wischerarms 102 verbunden. Dies kann beispielsweise durch außenseitiges Umspritzen der Hülse 132 und zumindest bereichsweises Umspritzen des Flansches 136 mit dem Material des Wischerarms 102 erfolgen, bei dem es sich bevorzugt um ein ggfls. Faserverstärktes, thermoplastisches Kunststoffmaterial handelt. Die Hülse 132 kann hingegen mit einem metallischen Werkstoff oder mit einem Kunststoffmaterial gebildet sein.

Infolge der Kraftwirkung des Federelements 142 wird das am Wischerarm 102 befestigte Wischblatt 104 wie bei der ersten Ausführungsform mit der Kraft F gegen die Fahrzeugscheibe 108 gedrückt. Zwischen dem Kopplungsabschnitt 128 der Abtriebswelle 110 und der Hülse 132 besteht bevorzugt eine geeignete Formschlussverbindung 150. Durch diese Formschlussverbindung 150 ist der Wischerarm 102 drehfest mit der Abtriebswelle 110 verbunden und zugleich axial auf dieser bzw. parallel zu der Längsmittelachse 116 verschiebbar, so dass ein Toleranzausgleich und ein Höhenausgleich zwischen der Fahrzeugscheibe 108 und dem am Wischerarm 102 geführten Wischblatt 104 möglich ist. Die Formschlussverbindung 150 kann beispielsweise mit einer Längsverzahnung des Kopplungsabschnitts 128 und einer hierzu korrespondierend ausgebildeten Innenverzahnung einer nicht bezeichneten Innenfläche der Hülse 132 realisiert sein. Die Aufnahme 122 in dem Anbindungsabschnitt 120 ist zum Schutz vor Fremdpartikeln und zur Verbesserung des optischen Gesamteindrucks nicht mit einem kappenförmigen, sondern vielmehr mit einem Verschlusselement 144 mit einer L-förmigen Querschnittsgeometrie abgeschlossen.

Im Fall einer dritten Ausführungsform kann - wie mit gestrichelten Linien angedeutet - anstelle des Einlegeelements 130 ein Einlegeelement 160 vorgesehen sein, das abweichend von der hohlzylindrischen Hülse 132 mit dem endseitigen radialen Flansch 136 bevorzugt mit einer im Wesentlichen hohlzylindrischen Hülse 162 mit einer umlaufenden Schulter 164 gebildet ist, wobei an jede Seite der Schulter 164 jeweils ein hohlzylindrischer Abschnitt 166, 168 anschließt. Die Befestigung des Einlegeelements 160 in der Aufnahme 122 kann beispielsweise durch außenseitiges Umspritzen mit dem Material des Wischerarms 102 erfolgen. Alternativ kann das Einlegeelement 160 auch in die Aufnahme 122 eingepresst oder mit dieser verklebt oder verschweißt sein.

Zwischen dem Abschnitt 168 - der im Vergleich zu dem Abschnitt 166 über einen reduzierten Durchmesser verfügt - und dem Kopplungsabschnitt 128 der Abtriebswelle 110 besteht bevorzugt ebenfalls eine geeignete Formschlussverbindung 170, die einerseits eine drehfeste Verbindung des Anbindungsabschnitts 120 des Wischerarms 102 mit der Abtriebswelle 110 und andererseits dessen axiale Verschiebbarkeit zum Toleranzausgleich auf dieser ermöglicht. Eine Öffnung 172 weist - wie mit zwei punktierten Linien angedeutet - zum vorzugsweise freien, unbehinderten Durchgang der Abtriebswelle 110 außerhalb ihres Kopplungsabschnitts 128 im Vergleich zu der Öffnung 126 der dritten Ausführungsform einen vergrößerten Durchmesser auf. Weiterhin ist eine Materialstärke 174 bzw. eine Wandungsstärke der hohlzylindrischen Abschnitte 166, 168 des Einlegeelements 160 im Vergleich zu einer Materialstärke 176 der Hülse 132 im Bereich des Kopplungsabschnitts 128 der Abtriebswelle 110 bevorzugt vergrößert. Für den Fall, dass der Wischerarm 102 bzw. dessen Anbindungsabschnitt 120 mit einem metallischen Werkstoff gebildet ist, können ggfls. sowohl das Einlegeelement 130 als auch das Einlegeelement 160 entfallen.

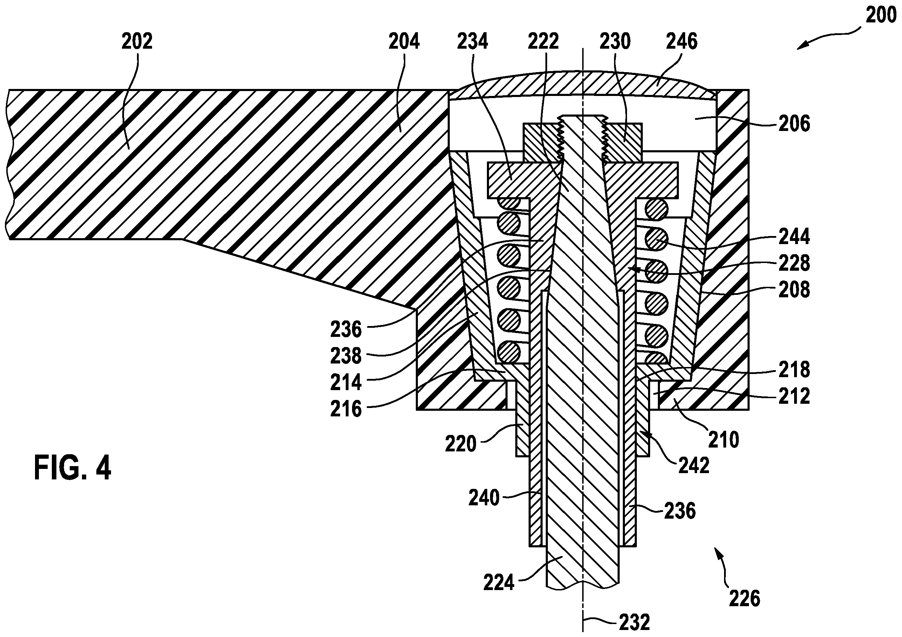

Fig. 4 zeigt eine gemäß einer vierten Ausführungsform ausgebildete Anordnung 200 mit einem Wischerarm 202 eines Wischersystems 226, der einen Aufnahmeabschnitt 204 mit einer vorzugsweise zumindest näherungsweise topfförmigen Aufnahme 206 aufweist, die hier lediglich exemplarisch mit einer abschnittsweise geringfügig konisch verlaufende Innenfläche 208 versehen ist. Die Aufnahme 206 verfügt illustrativ über einen Boden 210 mit einer Öffnung 212. In der Aufnahme 206 ist bevorzugt ein in etwa topfförmiges Einlegeelement 214 angeordnet, dessen vorzugsweise gleichfalls geringfügig konische Geometrie korrespondierend zu der Formgebung der Aufnahme 206 ausgestaltet ist.

Ein Boden 216 des Einlegeelements 214 weist eine Öffnung 218 auf, die axial in einen illustrativ hohlzylindrischen bzw. hülsenartigen Fortsatz 220 übergeht. Dieser Fortsatz 220 durchsetzt die Öffnung 212 in dem Boden 210 der Aufnahme 206 im Anbindungsabschnitt 204 des Wischerarms 202. Zwischen dem Fortsatz 220 und der Öffnung 218 kann ggfls. ein der besseren zeichnerischen Übersicht halber nicht bezeichneter Ringspalt vorgesehen sein.

Das Einlegeelement 214 ist bei dieser vierten Ausführungsform zur Fertigungsoptimierung bevorzugt mittels Formschluss in der Aufnahme 206 befestigt und kann z.B. mittels eines nicht dargestellten, beispielsweise umfangsseitig zumindest abschnittsweise umlaufenden Anschlags in der hier illustrierten, axialen Lage gesichert sein. Alternativ kann das Einlegeelement 214 auch durch Umspritzen mit dem Material des Wischerarms 202, durch Einpressen, Einkleben oder durch Einschweißen innerhalb der Aufnahme 206 befestigt sein.

An einem bevorzugt konischen Endabschnitt 222 einer Abtriebswelle 224 des Wischersystems 226 ist ein vorzugsweise im Wesentlichen hülsenartiges bzw. hohlzylindrisches Verbindungselement 228 mittels eines Befestigungselements 230 drehfest und axial unbeweglich bzw. entlang einer Längsmittelachse 232 unverschiebbar befestigt. Das Verbindungselement 228 verfügt illustrativ über einen kreisringförmigen, radial auswärts gerichteten Flansch 234, an den sich unterseitig ein hohler Schaft 236 anschließt. Im Bereich des Flansches 234 verläuft bevorzugt eine konische Öffnung 238 zur zumindest bereichsweise formschlüssigen Aufnahme des Endabschnitts 222 der Abtriebswelle 224. Die konische Öffnung 238 geht über eine der besseren Übersicht halber nicht bezeichnete Schulter in eine Öffnung 240 über, die den restlichen Schaft 236 zur Durchführung der Abtriebswelle 224 vollständig durchsetzt. Der Fortsatz 220 des Einlegeelements 214 umschließt den Schaft 236 des Verbindungselements 228 koaxial vorzugsweise spielfrei, wobei zwischen diesen Komponenten bevorzugt zumindest bereichsweise eine Formschlussverbindung 242 besteht, die wiederum die gewünschte drehfeste Verbindung, jedoch axial verschiebbare Verbindung schafft. Eine Weite der Öffnung 240 kann ggfls. so dimensioniert sein, dass ein nicht bezeichneter, schmaler Ringspalt zwischen der Abtriebswelle 224 und dem Schaft 236 besteht.

Zwischen dem Flansch 234 und dem Boden 216 des Einlegeelements 214 ist vorzugsweise wiederum ein Federelement 244 eingespannt, das hier beispielhaft als zylindrische Spiraldruckfeder ausgeführt ist. Durch die Kraftwirkung des Federelements 244 wird der axial-federnde Toleranzausgleich sowie das Andrücken des am Wischerarm 202 befestigten, hier jedoch nicht eingezeichneten Wischblattes gegen eine Fahrzeugscheibe mit einer definierten Kraft ermöglicht. Der Schaft 236 des Verbindungselements 228 ragt zumindest in dem hier gezeigten Spannungszustand des Federelements 244 über den Fortsatz 220 des Einlegeelements 214 hinaus.

Da das Einlegeelement 214 und das Verbindungselement 228 jeweils als ein getrenntes Formteil ausgeführt sind, ergibt sich bei dieser vierten Ausführungsform der Vorteil einer sicheren und dauerhaft leichtgängigen axialen Beweglichkeit des Wischerarms 202 in Relation zu der Abtriebswelle 224. Eine Länge des Einlegeelements 214 und des Verbindungselements 228 kann variieren. Erforderlichenfalls kann die zwischen dem Fortsatz 220 des Einlegeelements 214 und dem Schaft 236 des Verbindungselements 228 gebildete Formschlussverbindung 242, die eine der besseren zeichnerischen Übersicht halber nicht bezeichnete axiale Gleitfläche schafft, zumindest bereichsweise mit einem Elastomer versehen sein.

Für das Einlegeelement 214 und das Verbindungselement 228 können darüber hinaus auch unterschiedliche Werkstoffe zur weiteren Herabsetzung der Reibung eingesetzt werden. Die Aufnahme 206 im Anbindungsabschnitt 204 des Wischerarms 202 ist darüber hinaus mit einem Verschlusselement 246 verschlossen.

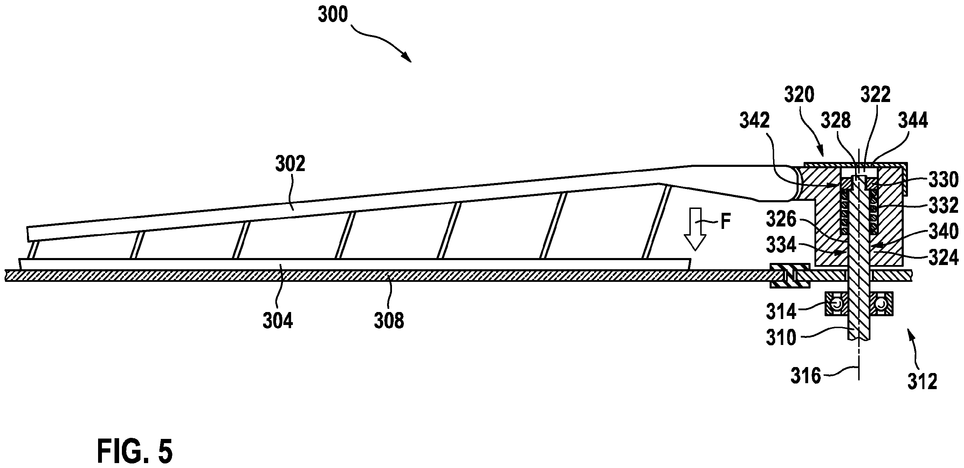

Fig. 5 zeigt eine gemäß einer fünften Ausführungsform ausgebildete Anordnung 300, die bevorzugt einen Wischerarm 302 mit einem daran unterseitig befestigten Wischblatt 304 zur Reinigung einer Fahrzeugscheibe 308 aufweist. Weiterhin verfügt die Anordnung 300 vorzugsweise über eine Abtriebswelle 310 als Teil eines Wischersystems 312, die mittels eines Lagerelements 314 drehbeweglich um eine Längsmittelachse 316 gelagert ist. Das Wischblatt 304 ist hier exemplarisch als ein s.g. "Flossenstrahl"-Wischblatt bzw. "Fin-Ray"-Wischblatt ausgestaltet.

In einen Anbindungsabschnitt 320 des Wischerarms 302 ist bevorzugt eine Aufnahme 322 eingebracht, deren Boden 324 eine entsprechend dimensionierte Öffnung 326 zur Durchführung der zumindest abschnittsweise zylindrischen Abtriebswelle 310 aufweist. An einem Endabschnitt 328 der Abtriebswelle 310 ist vorzugsweise ein Befestigungselement 330 befestigt, das beispielsweise als selbstsichernde Schraubmutter, als Speednut® oder dergleichen ausgeführt sein kann. Ggfls. kann das Befestigungselement 330 einen separat oder integral ausgeführten Unterleger aufweisen.

Zwischen dem Befestigungselement 330 und dem Boden 324 ist bevorzugt ein Federelement 332 eingespannt, das hier beispielhaft als zylindrische Spiraldruckfeder ausgeführt ist. Aufgrund der Kraftwirkung dieses Federelements 332 wird der Wischerarm 302 und damit das Wischblatt 304 mit einer definierten Kraft F gegen die Fahrzeugscheibe 308 gedrückt bzw. an dieser zur Anlage gebracht, wobei das Befestigungselement 330 als Widerlager dient. Zwischen einem Kopplungsabschnitt 334 der Abtriebswelle 310 und der Öffnung 326 in dem Boden 324 der Aufnahme 322 besteht vorzugsweise eine geeignete Formschlussverbindung 340, die eine drehfeste jedoch zugleich parallel zur Längsmittelachse 316 verschiebbare mechanische Verbindung zwischen dem Anbindungsabschnitt 320 und der Abtriebswelle 310 bereitstellt. Alternativ oder zusätzlich kann ggfls. eine weitere Formschlussverbindung 342 zwischen der Peripherie des Befestigungselements 330 selbst und einer nicht bezeichneten Innenfläche der Aufnahme 322 vorgesehen sein.

Infolge der solchermaßen gegebenen axialen Verschiebbarkeit des Wischerarms 302 in Relation zur Fahrzeugscheibe 308 ist wiederum ein vielfältiger Ausgleich von Toleranzabweichungen realisierbar, die z.B. durch Montagetoleranzen, Maßabweichungen der Karosserie oder Fertigungstoleranzen des Wischersystems 312 selbst entstehen. Die Aufnahme 322 ist wiederum mit einem winkelförmigen Verschlusselement 344 bedeckt.

Zumindest der Anbindungsabschnitt 320 des Wischerarms 302 ist - wie im übrigen die Abtriebswelle 310 auch - mit einem metallischen Werkstoff gebildet. Im Unterschied zu den vorstehenden Ausführungsformen ist bei der Anordnung 300 weder ein Verbindungselement noch ein Einlegeelement vorgesehen. Zwischen dem Anbindungsabschnitt 320 und dem Wischerarm 302 kann erforderlichenfalls ein Gelenk, insbesondere ein Filmgelenk oder dergleichen, vorgesehen sein.

## Patentansprüche

1. Anordnung (10, 100), die einen mit einem Wischblatt (14, 104) versehenen Wischerarm (12, 102) zur Befestigung an einer Abtriebswelle (20, 110) eines Wischersystems (22, 112) aufweist, die über mindestens ein Lagerelement (24, 114) um eine Längsmittelachse (26, 116) an einer zugeordneten Fahrzeugkarosserie (16, 106) drehbeweglich gelagert ist, **dadurch gekennzeichnet, dass** ein Anbindungsabschnitt (30, 120) des Wischerarms (12, 102) verdrehgesichert und axial in Richtung der Längsmittelachse (26, 116) verschiebbar an der Abtriebswelle (20, 110) befestigbar ist und mittels mindestens eines im Bereich der Abtriebswelle (20, 110) anordenbaren Federelements (48, 142) in Richtung der Fahrzeugkarosserie (16, 106) federbeaufschlagbar ist, um zumindest einen Höhentoleranzausgleich des Wischblatts (14, 104) des an der Abtriebswelle (20, 110) befestigten Wischerarms (12, 102) im Betrieb zu ermöglichen.

2. Anordnung nach Anspruch 1, **dadurch gekennzeichnet, dass** auf einem Endabschnitt (44) der Abtriebswelle (20) ein Verbindungselement (40) axial unbeweglich befestigbar ist und der Anbindungsabschnitt (30) des Wischerarms (12) eine Aufnahme (32) zur zumindest bereichsweise formschlüssigen Aufnahme des Verbindungselements (40) aufweist.

3. Anordnung nach Anspruch 2, **dadurch gekennzeichnet, dass** das mindestens eine Federelement (48) zwischen dem Verbindungselement (40) und einem Boden (34) der Aufnahme (32) abstützbar ist, wobei der Boden (34) der Aufnahme (32) eine Öffnung (36) zur Durchführung der Abtriebswelle (20) aufweist.

4. Anordnung nach Anspruch 2 oder 3, **dadurch gekennzeichnet, dass** das Verbindungselement (40) eine Öffnung (42) zur Anordnung auf dem Endabschnitt (44) der Abtriebswelle (20) aufweist und auf dieser mittels eines zugeordneten Befestigungselements (46) lagefixierbar ist.

5. Anordnung nach einem der Ansprüche 2 bis 4, **dadurch gekennzeichnet, dass** die Aufnahme (32) mit einem zugeordneten Verschlusselement (52) verschließbar ist.

6. Anordnung nach Anspruch 1, **dadurch gekennzeichnet, dass** der Anbindungsabschnitt (120) des Wischerarms (102) eine Aufnahme (122) mit einem Boden (124) aufweist und in den Boden (124) eine Öffnung (126) zur zumindest bereichsweise formschlüssigen Aufnahme eines Kopplungsabschnitts (128) der Abtriebswelle (110) eingebracht ist.

7. Anordnung nach Anspruch 6, **dadurch gekennzeichnet, dass** ein Einlegeelement (130) in der Öffnung (126) vorgesehen ist, das im Bereich zwischen dem Kopplungsabschnitt (128) der Abtriebswelle (110) und der Öffnung (126) positionierbar ist.

8. Anordnung nach Anspruch 7, **dadurch gekennzeichnet, dass** das Einlegeelement (130) zumindest abschnittsweise nach Art einer hohlzylindrischen Hülse (132) ausgebildet ist, die dazu ausgebildet ist, den Kopplungsabschnitt (128) der Abtriebswelle (110) zumindest abschnittsweise koaxial zu umschließen, wobei an einem axialen Hülsenende (134) ein radial auswärts gerichteter Flansch (136) ausgebildet ist.

9. Anordnung nach einem der Ansprüche 6 bis 8, **dadurch gekennzeichnet, dass** mindestens ein Federelement (142) vorgesehen ist, das zwischen einem an einem Endabschnitt (138) der Abtriebswelle (110) vorgesehenen Befestigungselement (140) und dem Boden (124) der Aufnahme (122) und/oder dem Flansch (136) des Einlegeelements (130) anordenbar ist.

10. Anordnung nach einem der Ansprüche 6 bis 9, **dadurch gekennzeichnet, dass** die Aufnahme (122) mit einem Verschlusselement (144) verschließbar ist.

## Claims

1. Arrangement (10, 100) which has a wiper arm (12, 102) provided with a wiper blade (14, 104) for securing to an output shaft (20, 110) of a wiper system (22, 112), said output shaft being mounted on an associated vehicle body (16, 106) in a rotatably movable manner about a central longitudinal axis (26, 116) via at least one bearing element (24, 114), **characterized in that** a connection portion (30, 120) of the wiper arm (12, 102) can be secured to the output shaft (20, 110) so as to be secured against rotation and in an axially movable manner in the direction of the central longitudinal axis (26, 116) and can be spring-loaded in the direction of the vehicle body (16, 106) by means of at least one spring element (48, 142) which can be arranged in the region of the output shaft (20, 110) in order to allow at least one height tolerance compensation of the wiper blade (14, 104) of the wiper arm (12, 102) secured to the output shaft (20, 110) during operation.

2. Arrangement according to Claim 1, **characterized in that** a connection element (40) is able to be secured in an axially immovable manner to an end portion (44) of the output shaft (20) and the connection portion (30) of the wiper arm (12) comprises a receiver (32) for the at least partially positive receiving of the connection element (40) .

3. Arrangement according to Claim 2, **characterized in that** the at least one spring element (48) is able to be supported between the connection element (40) and a base (34) of the receiver (32), wherein the base (34) of the receiver (32) comprises an opening (36) for passing through the output shaft (20).

4. Arrangement according to Claim 2 or 3, **characterized in that** the connection element (40) comprises an opening (42) for arranging on the end portion (44) of the output shaft (20) and is able to be fixed in position thereon by means of an associated securing element (46).

5. Arrangement according to one of Claims 2 to 4, **characterized in that** the receiver (32) is able to be closed by an associated closure element (52).

6. Arrangement according to Claim 1, **characterized in that** the connection portion (120) of the wiper arm (102) comprises a receiver (122) with a base (124) and an opening (126) for the at least partially positive receiving of a coupling portion (128) of the output shaft (110) is incorporated in the base (124).

7. Arrangement according to Claim 6, **characterized in that** an insertion element (130) is provided in the opening (126), said insertion element being able to be positioned in the region between the coupling portion (128) of the output shaft (110) and the opening (126).

8. Arrangement according to Claim 7, **characterized in that** the insertion element (130) is at least partially configured in the manner of a hollow-cylindrical sleeve (132) which is configured to enclose at least partially coaxially the coupling portion (128) of the output shaft (110), wherein a radially outwardly oriented flange (136) is formed on an axial sleeve end (134).

9. Arrangement according to one of Claims 6 to 8, **characterized in that** at least one spring element (142) is provided, said spring element being able to be arranged between a securing element (140) provided on an end portion (138) of the output shaft (110) and the base (124) of the receiver (122) and/or the flange (136) of the insertion element (130).

10. Arrangement according to one of Claims 6 to 9, **characterized in that** the receiver (122) is able to be closed by a closure element (144).

## Revendications

1. Ensemble (10, 100), qui comprend un bras d'essuie-glace (12, 102) doté d'un balai d'essuie-glace (14, 104), destiné à être fixé à un arbre de sortie (20, 110) d'un système d'essuie-glace (22, 112), lequel arbre de sortie est monté de manière mobile en rotation autour d'un axe médian longitudinal (26, 116) sur une carrosserie de véhicule (16, 106) associée par le biais d'au moins un élément de palier (24, 114), **caractérisé en ce qu'**une partie de raccordement (30, 120) du bras d'essuie-glace (12, 102) peut être fixée à l'arbre de sortie (20, 110) de manière bloquée en rotation et déplaçable axialement dans la direction de l'axe médian longitudinal (26, 116) et peut être sollicitée par ressort en direction de la carrosserie de véhicule (16, 106) au moyen d'au moins un élément ressort (48, 142) pouvant être disposé dans la région de l'arbre de sortie (20, 110), afin de rendre possible, lors du fonctionnement, au moins une compensation de tolérances en hauteur du balai d'essuie-glace (14, 104) du bras d'essuie-glace (12, 102) fixé à l'arbre de sortie (20, 110).

2. Ensemble selon la revendication 1, **caractérisé en ce qu'**un élément de liaison (40) peut être fixé de manière non mobile axialement sur une partie d'extrémité (44) de l'arbre de sortie (20) et la partie de raccordement (30) du bras d'essuie-glace (12) comprend un logement (32) servant à loger l'élément de liaison (40) par complémentarité de forme au moins dans certaines régions.

3. Ensemble selon la revendication 2, **caractérisé en ce que** ledit au moins un élément ressort (48) peut être supporté entre l'élément de liaison (40) et un fond (34) du logement (32), le fond (34) du logement (32) comprenant une ouverture (36) servant au passage de l'arbre de sortie (20).

4. Ensemble selon la revendication 2 ou 3, **caractérisé en ce que** l'élément de liaison (40) comprend une ouverture (42) destinée à être disposée sur la partie d'extrémité (44) de l'arbre de sortie (20) et peut être fixé en position sur celui-ci au moyen d'un élément de fixation (46) associé.

5. Ensemble selon l'une quelconque des revendications 2 à 4, **caractérisé en ce que** le logement (32) peut être fermé à l'aide d'un élément de fermeture (52) associé.

6. Ensemble selon la revendication 1, **caractérisé en ce que** la partie de raccordement (120) du bras d'essuie-glace (102) comprend un logement (122) doté d'un fond (124), et une ouverture (126) servant à loger par complémentarité de forme au moins dans certaines régions une partie d'accouplement (128) de l'arbre de sortie (110) est ménagée dans le fond (124) .

7. Ensemble selon la revendication 6, **caractérisé en ce qu'**un élément d'insertion (130) est prévu dans l'ouverture (126), lequel peut être positionné dans la région entre la partie d'accouplement (128) de l'arbre de sortie (110) et l'ouverture (126).

8. Ensemble selon la revendication 7, **caractérisé en ce que** l'élément d'insertion (130) est réalisé, au moins dans certaines parties, à la manière d'une douille (132) cylindrique creuse qui est conçue pour entourer de manière coaxiale, au moins dans certaines parties, la partie d'accouplement (128) de l'arbre de sortie (110), une collerette (136) orientée radialement vers l'extérieur étant réalisée sur une extrémité de douille (134) axiale.

9. Ensemble selon l'une quelconque des revendications 6 à 8, **caractérisé en ce qu'**au moins un élément ressort (142) est prévu, lequel peut être disposé entre un élément de fixation (140) prévu sur une partie d'extrémité (138) de l'arbre de sortie (110) et le fond (124) du logement (122) et/ou la collerette (136) de l'élément d'insertion (130).

10. Ensemble selon l'une quelconque des revendications 6 à 9, **caractérisé en ce que** le logement (122) peut être fermé à l'aide d'un élément de fermeture (144).
